# NEUE EUROPÄISCHE PATENTSCHRIFT

(11) **EP 1 702 174 B2**
(45) Veröffentlichungstag und Bekanntmachung des Hinweises auf die Entscheidung über den Einspruch: **18.05.2016**
(45) Hinweis auf die Patenterteilung: 07.11.2007
(21) Anmeldenummer: 04803993.7
(22) Anmeldetag: 17.12.2004
(51) Int. Cl.: F16N 11/10

(54) **VORRICHTUNG ZUR GEZIELTEN, STEUERBAREN ABGABE EINER FLÜSSIGKEIT ODER EINER VISKOSEN MASSE**
DEVICE FOR THE TARGETED, CONTROLLABLE DELIVERY OF A LIQUID OR VISCOUS SUBSTANCE
DISPOSITIF DE DISTRIBUTION CIBLEE ET REGULEE D'UN LIQUIDE OU D'UNE MATIERE VISQUEUSE

(30) Priorität: 20.12.2003 DE 10360185
(43) Veröffentlichungstag der Anmeldung: 20.09.2006
(73) Patentinhaber: WYSSMANN, Max, CH-3360 Herzogenbuchsee (CH)
(72) Erfinder: WYSSMANN, Max, CH-3360 Herzogenbuchsee (CH)
(74) Vertreter: Dantz, Jan Henning
(86) Internationale Anmeldenummer: PCT/EP2004/014384
(87) Internationale Veröffentlichungsnummer: WO 2005/061947

(56) Entgegenhaltungen:
- EP-B2- 0 826 128
- WO-A-88/00065
- WO-A-88/04750
- WO-A-89/08800
- WO-A-93/25841
- DE-A1- 3 532 335
- DE-A1- 19 522 451
- DE-T2- 3 688 686
- DE-U1- 9 202 740
- DE-U1- 29 602 882
- DE-U1- 29 819 715
- Kunststoff Taschenbuch, Hans-Jürgen Saechting, 24. auflage, 1989, (Seiten 398, 399, 401, 568, 569)

## Beschreibung

Die Erfindung betrifft eine Vorrichtung zur gezielten, steuerbaren Abgabe einer Flüssigkeit oder einer viskosen Masse nach dem Oberbegriff des Anspruches 1.

Eine derartige Vorrichtung ist aus der EP 0 598 867 B1 (Wyssmann) bekannt. Die Förderung kleiner, insbesondere vergleichsweise wertvoller flüssiger oder viskoser Substanzen nach einem vorher festgelegten genau einzuhaltenden Zeitplan mittels einer selbsttätigen, autonomen Steuerung des Programmablaufs im wesentlichen ohne Eingriff von außen wird insbesondere mit Vorrichtungen durchgeführt, wie sie aus der genannten gattungsgemäßen EP 0 598 867 B1 prinzipiell bekannt sind.

Weiteren Stand der Technik zeigen die DE 195 22 451 A1, die DE 35 32 335 A1, die DE 92 02 740 U1, die EP 05 98 867 B1 , die EP 0 362 328 B1 (zweischichtiger Aufbau, transparenter Kunststoff mit gasdichter Metallbeschichtung, die aber nicht durchsichtig ist) und die EP 0343 157 B1.

Geeignete Gasentwicklungszellen für derartige Vorrichtungen werden beispielsweise in der DE 35 32 335 A1 (Winsel) oder der EP 0 343 157 B1 (Winsel) beschrieben. Eine entsprechende Vorrichtung zur Injektion oder Infusion einer pharmazeutischen Lösung nutzbar ist, ist in der EP 0 278 954 B1 (Winsel) beschrieben.

Die gattungsgemäßen Vorrichtungen haben sich an sich bewährt.

Zum Stand der Technik wird ferner die WO 89/08800 A genannt, die den Gegenstand des Oberbegriffs des Anspruchs 1 zeigt.

Problematisch sind aber die insbesondere bei höheren Gegendrücken und/oder Temperaturen und/oder längeren Laufzeiten auftretenden, nicht genau genug kalkulierbaren Verluste aufgrund der Diffusion des von der Gasent wicklungszelle entwickelten Gases zum Antrieb des Kolbens zum Austrag der Flüssigkeit oder der viskosen Masse aus dem Behältnis.

Die Erfindung hat die Aufgabe, dieses Problem zu beheben.

Die Erfindung löst diese Aufgabe durch den Gegenstand des Anspruches 1.

Vorteilhafte Ausgestaltungen sind den Unteransprüchen zu entnehmen.

Die Wandung des Behältnisses ist zumindest abschnittsweise dreischichtig aufgebaut. Sie besteht aus transparenten, durchscheinenden Schichten derart, dass stets der Füllungsstand sichtbar bleibt. Anders als bei einer Sperrschicht aus Metall kann damit der gesamte Zylindermantel durchscheinend ausgebildet sein.

Hierbei bestehen die innere und die äußere Schicht des dreischichtigen Aufbaus aus transparentem Kunststoff, wobei die mittlere Schicht zwischen den beiden transparenten Kunststoffschichten aus einem Material besteht, das/die ebenfalls transparent ist und einen geringen Diffusionskoeffizienten für das von der Gasentwicklungszelle entwickelte und in den Druckraum abgegebene Gas aufweist.

Es bestehen die äußere und innere Schicht aus transparentem PET. Die mittlere Sperrschicht besteht weiter aus transparentem Polyamid, das sogar als feste Schicht verarbeitet werden kann und hat eine Dicke von 30 - 60%, insbesondere 40 50%, ganz besonders bevorzugt 45% der ganzen Wandung. Hiermit werden besonders gute Ergebnisse erzielt und es wird ein besonders guter Kompromiss aus guter Abdichtung und stabiler Auslegung realisiert.

Eine derartige Anordnung kann in einem modernen Kunststoffspritzverfahren (Coinjection oder Multimaterial Molding) gefertigt werden.

Ein besonderes Anwendungsgebiet sind Schmierstoffgeber, bei denen das von der Gasentwicklungszelle er zeugte und zum Vortrieb des Kolbens verwendete Gas Wasserstoff ist..

Nachfolgend wird die Erfindung anhand eines Ausführungsbeispiels unter Bezug auf die Zeichnung näher beschrieben.

Es zeigt:
Figur 1 eine schematische Ansicht einer erfindungsgemäßen Vorrichtung;
Figur 2 eine vergrößerte Darstellung der Gehäusewand der Vorrichtung aus Figur 1,
Figur 3 ein Detail einer weiteren Vorrichtung.

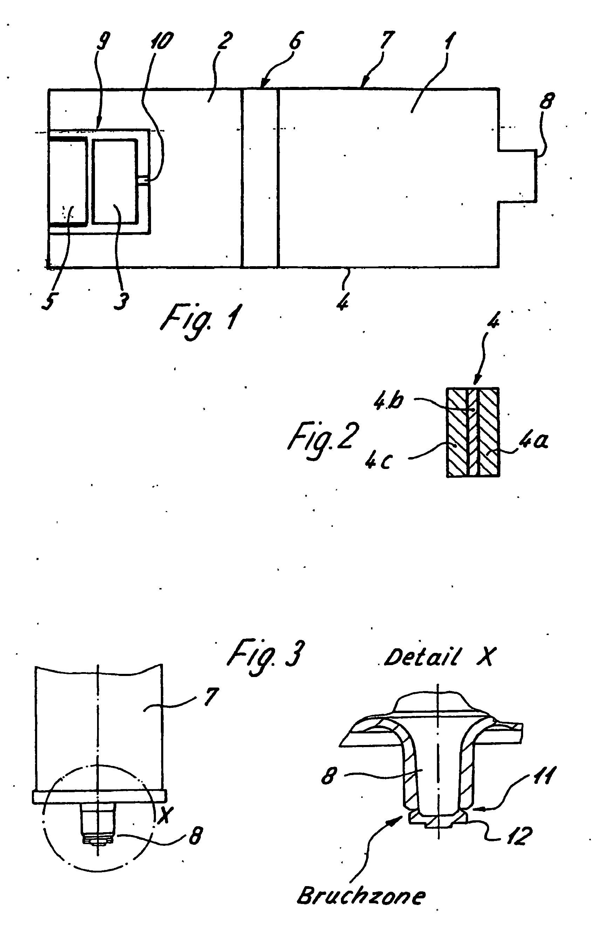

Figur 1 zeigt ein vorzugsweise zylindrisches Behältnis 7, in dem ein Kolben 6 verschieblich geführt ist.

Der Kolben 6 unterteilt das Behältnis 7 in einen Druckraum 2 sowie einen Vorratsraum 1 für viskose Masse, insbesondere Schmierstoffe.

Das Behältnis 7 weist an einem seiner axialen Enden auf der einen Seite des Kolbens 6, auf welcher der Schmierstoff 1 im Vorratsraum 1 aufgenommen ist eine Austrittsöffnung 8 auf und an seinem gegenüberliegenden axialen Ende, welches zum Druckraum 2 hin gerichtet ist, einen Einsatz 9, in dem zumindest eine Gasentwicklungszelle 3 sowie eine elektrische Schaltung 5 und eine hier nicht zu erkennende Einrichtung zur Laufzeitsteuerung (Drehschalter oder dgl.) untergebracht sind.

Wenigstens eine Durchtrittsöffnung 10 zwischen der Gasentwicklungszelle 3 und dem Druckraum 2 ermöglicht den Durchtritt von Gas, welches die Gasentwicklungszelle 3 abgibt, in den Druckraum 2. Je nach Abhängigkeit der Einstellung der Laufzeitsteuerung siehe hierzu den genannten Stand der Technik erfolgt nunmehr die Entwicklung von Gas, insbesondere Wasserstoff, so dass der Kolben 6 von der Gasentwicklungszelle bewegt wird und den Schmierstoff 1 aus der Austrittsöffnung 8 drängt.

Wie in Figur 2 zu erkennen, ist die Wandung 4 des Behältnisses 7 abschnittsweise, vorzugsweise aber vollständig mehrschichtig aufgebaut. Dabei ist eine dreischichtige Konstruktion zu wählen mit inneren und äußeren Schichten 4a, 4c aus einem transparenten Kunststoff und zwischen diesen eine Sperrschicht 4b, aus einem, eine nur sehr geringe Diffusion von Gas, insbesondere Wasserstoff, erlaubendem Material auszubilden.

Auf diese Weise wird nicht nur der Verlust an Gas, insbesondere Wasserstoffgas besonders bei hohem Gegendruck an der Austrittsöffnung deutlich verringert, sondern auch die Genauigkeit der Abgabe der viskosen Masse aus der Vorrichtung, insbesondere bei höheren Drücken oder längeren Abgabezeiten erhöht. So ist es beispielsweise denkbar, mit der erfindungsgemäßen Vorrichtung Schmierstoffe auch über Zeiträume von bis zu einem Jahr oder mehr präzise abzugeben und die Vorrichtung selbst bei Gegendrücken von über 5 bar noch zufriedenstellen zu betreiben. Analoges gilt für erhöhte Temperaturen, die sich auch in einem höheren Druck auswirken können.

An die Austrittsöffnung 8 wird nach einer erfinderischen Variante ein über eine Sollbruchstelle 11 lösbarer, insbesondere abbrechbarer Verschluß 12 angeformt.

Diese Idee verbessert das Entfernen des angespritzten Verschlusszapfens am Trichter zu dem Schmierstoffspender.

Funktion: Der Verschlußzapfen kann mit einem Standardwerkzeug (Schlüssel, Zange) abgedreht werden, dabei entstehen keine, durch die spezifische Formgebung und die Drehbewegung, in den Rohrquerschnitt ragende Brauen.

### Bezugszeichen

- Schmierstoff: 1
- Druckraum: 2
- Gasentwicklungszelle: 3
- Wandung: 4
- Elektronikschaltung: 5
- Kolben: 5
- Behältnis: 7
- äußeren Schicht: 7a, 7c
- Sperrschicht: 7b
- Austrittsöffnung: 8
- Einsatz: 9
- Durchtrittsöffnung: 10
- Sollbruchstelle: 11
- Verschluß: 12

## Patentansprüche

1. Vorrichtung zur gezielten, steuerbaren Abgabe einer Flüssigkeit oder einer viskosen Masse, mit
a) einem Behältnis (7), das insbesondere zylindrisch ausgestaltet ist, in dem ein Kolben (6) beweglich, insbesondere verschieblich geführt ist, welcher das Behältnis (7) in einen Vorratsraum (1) für die viskose Masse und einen Druckraum (2) für Gas unterteilt,
b) wobei der Vorratsraum (1) für die viskose Masse in einer Austrittsöffnung (8) für die viskose Masse mündet,
c) wobei in das Behältnis (7) im Druckraum (2) ein Einsatz (9) eingesetzt ist, der zumindest eine Gasentwicklungszelle (3) und eine Schaltung zur Laufzeitsteuerung (5) enthält,
d) wobei die Wandung des Behältnisses (7) wenigstens zwei Schichten aufweist, die aus verschiedenen chemischen Substanzen bestehen,
**dadurch gekennzeichnet, daß**
e1) die Wandung des Behältnisses (7) zumindest abschnittsweise dreischichtig, aufgebaut ist,
e2) wobei wenigstens zwei der Schichten aus verschiedenen chemischen Substanzen bestehen und wobei die Wandung (4) des Behältnisses (7) aus transparenten, durchscheinenden Schichten besteht,
f1) die innere und die äußere Schicht (4a, 4c) der dreischichtigen Wandung (7) aus transparentem, durchscheinendem Kunststoff bestehen,
f2) wobei die mittlere Schicht (4b) zwischen den beiden transparenten Schichten (4a, 4c) aus einem ebenfalls transparentem Material besteht, und
f3) einen geringeren Diffusionskoeffizienten für das von der Gasentwicklungszelle zu entwickelnde Gas aufweist als die innere und die äußere Schicht (4a, 4c), wobei
g) die mittlere Sperrschicht aus Polyamid besteht und eine Dicke von 30 - 60% der ganzen Wandung aufweist; und
h) wobei die innere und äußere Schicht (4a, 4c) aus transparentem PET besteht.

2. Vorrichtung nach Anspruch 1, **dadurch gekennzeichnet, daß** an die Austrittsöffnung (8) ein über Sollbruchstellen (11) wie Kerben lösbarer, insbesondere abbrechbarer Verschluß (11) angeformt ist.

3. Vorrichtung nach einem der vorstehenden Ansprüche, **dadurch gekennzeichnet, daß** die mittlere Sperrschicht eine Dicke von 40-50 % der ganzen Wandung aufweist, bevorzugt 45 %.

## Claims

1. An apparatus for the deliberate, controllable emission of a liquid or a viscous substance, comprising
a) a container (7) which is especially cylindrical and in which a piston (6) is movably guided, in particular linearly, subdividing the container (7) into a reservoir area (1) for the viscous substance and a pressurized area (2) for gas;
b) wherein the reservoir area (1) for the viscous substance opens into an outlet opening (8) for the viscous substance;
c) wherein an insert (9) is inserted into the pressurized area (2) in the container (7) and contains at least one gas development cell (3) and a circuit for delay time control (5);
d) wherein the wall of the container (7) comprises at least two layers which are composed of different chemical substances,
**characterized in that**
e1) of the container (7) is formed with three layers, at least in places;
e2) wherein at least two of the layers are composed of different chemical substances, and wherein the wall (4) of the container (7) consists of transparent layers which can be looked through;
f1) the inner and the outer layer (4a, 4c) of the three-layer wall (7) are composed of transparent plastic which can be looked through;
f2) wherein the central layer (4b) between the two transparent layers (4a, 4c) is composed of a material which is likewise transparent, and
f3) has a lower diffusion coefficient for the gas to be developed by the gas development cell than the inner and the outer layer (4a, 4c), wherein
g) the central barrier layer is composed of polyamide and has a thickness of 30 to 60% of the entire wall, and
h) wherein the inner and outer layer (4a, 4c) are composed of transparent PET.

2. An apparatus according to claim 1, **characterized in that** the closure (11), which can be detached, and in particular can be broken off, by means of weak points (11) such as notches, is integrally formed adjacent to the outlet opening (8).

3. An apparatus according to one of the preceding claims, **characterized in that** the central barrier layer has a thickness of 40 to 50% of the entire wall, preferably 45%.

## Revendications

1. Dispositif pour le déversement ciblé commandable d'un liquide ou d'une masse visqueuse, comprenant
a) un conteneur (7), en particulier de forme cylindrique, dans lequel est monté un piston (6) déplaçable, en particulier par coulissement, qui partage le conteneur (7) en un compartiment de réservoir (1) pour la masse visqueuse et un compartiment de pression (2) pour du gaz,
b) le compartiment de réservoir (1) pour la masse visqueuse se terminant par un orifice d'écoulement (8) pour la masse visqueuse,
c) un insert (9) étant de préférence mis en place dans le compartiment de pression (2) du conteneur (7), lequel comprend au moins une cellule de dégagement de gaz (3) et un circuit pour la commande de durée (5),
d) la paroi du conteneur (7) comportant au moins deux couches formées de substances chimiques différentes,
**caractérisé en ce que**
e1) la paroi du conteneur (7) présente au moins par endroits une structure à trois couches,
e2) au moins deux couches étant formées de substances chimiques différentes et la paroi (4) du conteneur (7) étant composée de couches transparentes, translucides,
f1) la couche intérieure et la couche extérieure (4a, 4c) de la paroi à trois couches (7) sont formées de matière synthétique transparente, translucide,
f2) la couche intermédiaire (4b) entre les deux couches transparentes (4a, 4c) étant formée d'une matière également transparente et
f3) présentant un coefficient de diffusion pour le gaz à dégager de la cellule de dégagement de gaz qui est inférieur à celui de la couche intérieure et de la couche extérieure (4a, 4c),
g) la couche extérieure formant barrage se compose de polyamide et présente une épaisseur de 30 à 60 % de la totalité de la paroi ; et
h) la couche intérieure et la couche extérieure (4a, 4c) se composent de PET transparent.

2. Dispositif selon la revendication 1, **caractérisé en ce qu'**une obturation (11) amovible, en particulier cassable par des zones de rupture obligée (11) telles que des encoches, est formée sur l'orifice d'écoulement (8).

3. Dispositif selon l'une des revendications précédentes, **caractérisé en ce que** la couche intermédiaire formant barrière présente une épaisseur comprise entre 40 et 50 %, de la totalité de la paroi, de préférence égale à 45 %.
